# EUROPÄISCHE PATENTSCHRIFT

(11) **EP 3 599 808 B1**
(45) Veröffentlichungstag und Bekanntmachung des Hinweises auf die Patenterteilung: **15.06.2022**
(21) Anmeldenummer: 18717527.8
(22) Anmeldetag: 22.03.2018
(51) Int. Cl.: A01B 29/04, A01B 29/06

(54) **VORRICHTUNG UND VERFAHREN ZUM WALZEN VON INSBESONDERE ACKERBÖDEN O. DGL. NUTZFLÄCHEN**
DEVICE AND METHOD FOR ROLLING PARTICULARLY AGRICULTURAL LAND OR SIMILAR USABLE AREAS
DISPOSITIF ET PROCÉDÉ POUR ROULER, EN PARTICULIER, DES SOLS AGRICOLES OU D'AUTRES SURFACES UTILES

(30) Priorität: 22.03.2017 DE 102017002727; 03.11.2017 DE 102017125676; 10.11.2017 DE 202017106829 U
(43) Veröffentlichungstag der Anmeldung: 05.02.2020
(73) Patentinhaber: Kalverkamp, Felix, 49434 Vörden (DE); Kalverkamp, Klemens, 49401 Damme (DE)
(72) Erfinder: Kalverkamp, Felix, 49434 Vörden (DE); Kalverkamp, Klemens, 49401 Damme (DE)
(74) Vertreter: Bossmeyer, Jörg Peter
(86) Internationale Anmeldenummer: PCT/EP2018/057303
(87) Internationale Veröffentlichungsnummer: WO 2018/172461

(56) Entgegenhaltungen:
- EP-A1- 2 730 155
- DE-A1- 3 631 462
- DE-A1- 3 815 279
- DE-U1- 29 608 373
- DE-U1-202007 009 692
- US-A1- 2008 318 747

## Beschreibung

Die Erfindung ist auf eine Vorrichtung und ein Verfahren zum Walzen von insbesondere Ackerböden o. dgl. Nutzflächen gerichtet. Die Vorrichtung ist in Form einer so genannten Packerwalze für die Anwendung an unterschiedlichen Bodenbearbeitungsgeräten geeignet, wobei jeweils der erfindungsgemäße Verfahrensablauf genutzt wird.

Im Zusammenhang mit unterschiedlichen Bodenbearbeitungsgeräten ist die Anwendung von Vorrichtungen zum Walzen seit langem bekannt. In DE 43 35 734 A1 ist eine Stütz- und Rückverfestigungseinrichtung gezeigt, wobei die Walze aus einzelnen Stegen gebildet ist, über denen ein elastischer Hüllzylinder so angeordnet ist, dass in der Auflagezone der Hüllzylinder zwischen den benachbarten Stegen einfedern kann. Eine ähnliche Konstruktion zeigt DE 20 2007 009 692 U1, wobei ein die Packerwalze bildender Walzenkörper mindestens einen Schlauchkörper aufweist, der als Laufflächen ausgebildete Vorsprünge aufweist. Der Schlauchkörper nutzt dabei eine faltenbalgartige Ausgestaltung, wobei im Walzenkörper parallel zur Drehachse verlaufende Profilstäbe vorgesehen sind. Damit soll die Auflockerung der zu bearbeitenden Bodenschichten verbessert werden.

Bei einer Packerwalze gemäß DE 296 08 373 U1 ist die Walze mit einem Grundkörper versehen, der sowohl eine erste als auch eine zweite, jeweils aus einem elastischen Material bestehende Schicht aufweist, die durch einen radial symmetrischen Abstand voneinander beabstandet sind. In diesen Abstand sind jeweilige Abstandshalter eingebracht. Eine Konstruktion mit einer Mantelfläche ist auch in DE 19 22 313 vorgesehen, wobei diese Konstruktion des Außenmantels ein Anhaften von Erde vermeiden soll.

Bei einem Konstrukt gemäß US 3,339,643 A wird eine Packerwalze vorgeschlagen, bei der mehrere ringförmige elastische Elemente nebeneinander auf einer metallischen Grundwalze montiert sind. Dieses Konzept realisiert auch eine Konstruktion gemäß FR 2347863 A. Auch die Bodenwalze gemäß DE 36 31 462 A1 weist nebeneinander angeordnete Gummireifen auf, mit denen eine Bodenwalze für eine Drillmaschine gebildet wird. Die DE 38 15 279 A1 offenbart eine Bodenwalze, insbesondere Nachlaufwalze hinter einer Bodenbearbeitungsmaschine und/oder Fahrwerk einer Drillmaschine, mit nebeneinander auf einem Traggerüst drehbar angeordneten Gummireifen, wobei im Inneren der Gummireifen zwischen dem Traggerüst und dem Bereich der Lauffläche des Reifens ein oder mehrere Stützkörper zum Abstützen der Lauffläche angeordnet sind. Dabei sind die Stützkörper zumindest auf ihrer äußeren und der Lauffläche des Gummireifens zugewandten Seite flexibel und/oder elastisch ausgebildet.

Bei einer Ackerwalze gemäß EP 0 379 672 A1 wird ein Traggerüst von einem als elastischer Mantel ausgebildeten Walzenkörper umgeben, wobei der Mantel zumindest in einem Teilbereich seiner Länge in radialer Richtung verformbar ausgebildet ist und das Traggerüst mit im Wesentlichen ringförmigen Stützelementen zur seitlichen und/oder radialen Abstützung versehen ist. Damit wird eine radiale Ringwulst realisiert, so dass Spannungsspitzen oder Knicke vermieden werden sollen, um Beschädigungen des Mantels und eine Verkürzung dessen Lebensdauer zu vermeiden. Außerdem ist vorgesehen, dass bei dieser Ackerwalze eine weitgehende Selbstreinigung des Mantelsystems erfolgen kann.

Bei einer Bodenbefestigungswalze gemäß EP 0 091 878 wird eine Konstruktion gezeigt, wobei im Innenraum eines äußeren Mantels ein flexibles und elastisches Erdabstoßungsorgan angeordnet wird. Bei Bodenkontakt wird dieses Erdabstoßungsorgan zumindest teilweise deformiert, so dass nach dem Kontakt des Erdabstoßungsorgans mit dem Boden eine Rückdeformierung von Teilbereichen erreicht wird. Insbesondere ist das Erdabstoßungsorgan dabei als ein Schlauch ausgebildet.

Die Ausnutzung von mehreren ring- bzw. reifenförmigen Segmenten im Bereich einer komplexen Packerwalze ist auch Gegenstand einer Konstruktion gemäß US 8,491,451 B2. Dabei weisen die Ringsegmente einen Federhohlraum auf, über dem sich gewölbeartig ein Profil erstreckt, das Rückfedereigenschaften aufweist. Eine derartige Gewölbestruktur mit gleichmäßigen Wanddicken im Bereich der Profilwandungen ist auch in EP 3 075 220 A1 vorgeschlagen. Auch in EP 2 730 155 A1 ist eine derartige reifenartige Konstruktion vorgesehen, wobei das jeweilige Stützgewölbe in seitlichen Wandbereichen eine Einformung aufweist, so dass definierte Walkzonen bei der Belastung in der Auflageposition vorgegeben werden. Diese Wulstprofile arbeiten mit nebengeordneten Profilringen zusammen, deren Ausgangsdurchmesser mit einem geringen Maß vorgegeben ist.

Aus DE 20 2014 106 031 U1 ist eine Packerwalze bekannt, die ähnlich DE 296 08 373 U1 eine offene Struktur aufweist. Dabei soll ein Selbstreinigungseffekt dadurch erreicht werden, dass längslaufende Leisten durch Federelemente radial nach außen gedrückt werden.

Der Erfindung liegt die Aufgabe zugrunde, ein Verfahren und eine Vorrichtung zum Walzen von Ackerböden zu schaffen, die im Bereich einer vergleichsweise einfach aufgebauten Konstruktion des Außenmantels eine Verbesserung des Selbstreinigungseffektes ermöglichen, wobei insgesamt eine verschleißarme Verfahrensführung mit erhöhter Reinigungsqualität erreicht wird.

Zur Lösung dieser Aufgabe wird erfindungsgemäß eine Walze mit den Merkmalen des Anspruchs 1 vorgeschlagen. Vorteilhafte Weiterbildungen und Ausgestaltungen ergeben sich aus den Ansprüchen 2 bis 15.

Die Vorrichtung zum Walzen von Ackerböden ist mit einer auf diesen abrollbaren Ackerwalze versehen, wobei deren Packwalzenkörper einen speziellen Außenmantel aufweist. Dieser kann unter Wirkung einer in elastisch verformbaren Profilbereichen erfolgenden Rückfederung weitgehend selbsttätig von anhaftenden Teilen gesäubert werden.

Um eine Verbesserung dieses Selbstreinigungseffektes zu erreichen, ist erfindungsgemäß vorgesehen, dass die Ackerwalze während ihrer bodenseitigen Auflagephase beim Abrollvorgang auf zumindest einem in den elastischen Außenmantel integrierten Auflageprofilring abgestützt wird. Die in dieser Bearbeitungsphase wirksamen Auflagebelastungen werden mittels des "formstabilen" Auflageprofilrings zielgerichtet so verteilt, dass über den Umfang des Außenmantels verteilte Druck-, Zug-und/oder Schubkräfte eine exzentrische Verlagerung des Auflageprofilrings aus seiner - in unbelastetem Zustand in Bezug zur Rollachse definierten - Zentrumslage heraus bewirken. Daraus resultiert bei den Rollbewegungen der erfindungsgemäßen Struktur ein im elastischen Material des Außenmantels erzeugter Wechsel von Druck-, Zug- und/oder Schubbelastungszonen. Diese durch eine Einstellung der Bearbeitungsparameter an der Vorrichtung beeinflussbaren Bedingungen werden nunmehr für einen permanenten und überraschend effektiven Reinigungsvorgang ausgenutzt. Es hat sich gezeigt, dass mit dem als integrierter "Walksteuerring" wirkenden Auflageprofilring die abrollende Ackerwalze auch bei komplizierten Bodenbedingungen selbsttätig von Anhaftungen sauber gehalten wird.

Mit dieser auf einer Umfangs-Walk-Struktur basierenden Verfahrensführung und den variabel vorgebbaren Einstellparametern im Bereich der in Richtung des Ackerbodens positionierbaren Vorrichtung wird erreicht, dass an dem Außenmantel mittels der exzentrischen Verlagerung zumindest seines mantelintegrierten Auflageprofilrings erstmalig - im Unterschied zum bekannten Walken nur in den Auflagezonen - ein vollumfängliches Umfangswalken wirksam ist. Damit wird eine signifikante Verbesserung der Selbstreinigungswirkung an Profilen mit der erfindungsgemäßen Strukturierung erreicht. Eine Grundlage für diese Verfahrensführung wird dadurch gebildet, dass der Außenmantel im Bereich des eine selbsttragende Walkstruktur bildenden Auflageprofilrings einer radial "mitlaufenden" Exzenterverlagerung ausgesetzt wird und diese mit den Zug-Druck-Schub-Wechselbelastungen beim Abrollvorgang den verbesserten Reinigungseffekt an dem profilierten Außenmantel auslöst.

Dieses erfindungsgemäße Umfangswalken wird dabei mittels jeweiliger Einstellungen von Auflagebedingungen des Systems gezielt eingesetzt, wobei maschinenseitige Stellparameter die kompakt-elastischen Packwalzenkörper so beeinflussen können, dass variierbare Intensitäten des Reinigungseffektes vorgegeben werden und mit geringem Aufwand eine Anpassung an unterschiedliche Bodenstrukturen beim Walzvorgang erreichbar ist. Diese Anpassungen an spezifische Bedingungen kann durch Auswahl und Optimierung des Walzenmaterials, Anpassung der Durchmesserdifferenzen von Auflageprofilring und Stützprofilringen und/oder deren variable Steifigkeiten erreicht werden.

Dabei hat ein praktischer Vergleich mit dem Stand der Technik - hier: nachteilige Klebeeigenschaften aufweisendes Keilringwalzen zur Bildung von streifenweise verdichteten Bodenstrukturen - gezeigt, dass das erfindungsgemäße System bei verminderter Bodenanhaftung ebenfalls die für das nachfolgende Einbringen von Saatgut vorteilhaften "streifenartigen Längslockerungszonen" ausbilden kann.

Entsprechend der vorgesehenen Verfahrensführung mit Selbstreinigungs-Walken ist die konstruktive Gestaltung des Packwalzenkörpers auf die spezifische Strukturierung des Außenmantels gerichtet. Dieser ist erfindungsgemäß mit zumindest einer einen Auflageprofilring aufweisenden Walkstruktur versehen. Innerhalb dieser Struktur ist an diesen Auflageprofilring beidseits in axialer Richtung jeweils ein radial umlaufender Federwandteil angeformt. Diese Federwandteile ihrerseits gehen jeweils axial endseitig in einen jeweiligen Stützprofilring über.

Im Bereich dieser Stützprofilringe ist die Walkstruktur vorzugsweise mit zumindest einem radial innen liegenden sowie zur Rollachse des Packwalzenkörpers hin abstützbaren Trägerteil verbindbar. Damit wird zwischen den beiden endseitigen Stützprofilringen und dem "mittleren" Auflageprofilring über die Federwandteile ein weitgehend "frei verlagerbares" Walksystem aufgebaut, mit dem eine - mit Blick auf die bekannten einfachen "Reifensysteme" - verbesserte Selbstreinigung realisiert werden kann.

Dieses Walksystem zeichnet sich dadurch aus, dass der Auflageprofilring in der aufliegenden Rollphase zumindest bereichsweise radial verlagerbar ist. Insbesondere sind die Komponenten er Walkstruktur so aufeinander abgestimmt, dass der Auflageprofilring vollumfänglich als Ringteil "verlagert" werden kann. Dabei sind auch Deformationen der Ringkontur nach Art eines "elliptischen" Ringes denkbar.

Die Walkstruktur ist dabei so konzipiert, dass der Auflageprofilring einen Durchmesser aufweist, der größer ist als die insbesondere jeweils gleich großen Durchmesser der nebengeordneten Stützprofilringe. Von essentieller Bedeutung für diese neue Mehr-Ring-Walkstruktur ist dabei die optimierbare Ausbildung des zumindest einen Auflageprofilrings. Dieser ist in Umfangsrichtung mit einer - inneren oder äußeren - Spannstruktur versehen, derart, dass der Auflageprofilring in Umfangsrichtung als ein ausgesteifter Teilbereich wirken kann. Damit wird erreicht, dass zumindest der Auflageprofilring in der aufliegenden Rollphase eine zumindest bereichsweise über die Mantelumfangsfläche überstehende Exzenterlage in Bezug auf die Rollachse des Systems einnehmen kann. Diese Exzenterlage bewirkt innerhalb der profilierten elastischen Walkstruktur eine vollumfängliche Zug-Druck-Schub-Wechselbelastung mit Verformung von Wandungsteilen des Außenmantels, so dass dieser permanent von anhaftenden Teilen gesäubert werden kann. In dieser Phase einer "Achsverschiebung" sind auch Überlagerungen von Zug-, Druck- und/oder Schubkräften in der elastischen Struktur wirksam.

In vorteilhafter Ausführung ist die Spannstruktur des Auflageprofilrings von einem in dessen Ringkontur integrierbaren Spannelement in Form eines metallischen Ringkörpers gebildet. Damit ist die Steifigkeit dieses Ringkörpers variabel vorgebbar, so dass die jeweiligen Kontaktarten des Systems auf dem Ackerboden an die jeweilige Walzaufgabe anpassbar sind.

Die konstruktive Umsetzung dieser Strukturen sieht vor, dass die aus dem Auflageprofilring, den beiden zu diesem symmetrischen Federwandteilen und den beiden Stützprofilringen gebildete Walkstruktur als eine radiale Funktionseinheit an einem Ringsegment zum Walzen-Aufbau vorgesehen ist. Ausgehend von dieser an sich bekannten Ausbildung derartiger Packwalzenkörper ist vorgesehen, dass mehrere der erfindungsgemäßen Ringsegmente axial aneinandergereiht werden und damit eine Ackerwalze mit mehreren Arbeitszonen gebildet wird. Dabei ist vorgesehen, dass die Funktionseinheiten mittels der beiden endseitigen Stützprofilringe unmittelbar auf dem vorzugsweise als ein Profilrohr ausgebildeten zentralen Trägerteil festgelegt werden. Dabei wird erreicht, dass mit den Stützprofilringen jeweilige endseitige Haltebereiche zwischen den Ringsegmenten definiert sind und hier eine insbesondere formschlüssige Verbindung aufgebaut wird.

Die innere Struktur dieses Systems sieht vor, dass in axialer Richtung zwischen den beiden Haltebereichen der Funktionseinheit ein Deformationsfreiraum zum innen liegenden Trägerteil hin gebildet ist. Dazu ist das variabel ausführbare Trägerteil so geformt, dass zur radialen Innenseite der umlaufenden Funktionseinheit - aus den beiden Stützprofilringen und dem zentralen Auflageprofilring - hin jeweilige, eine Walkarbeitszone begrenzende Auflageprofilflächen im Bereich des Trägerteils nutzbar werden.

Die weitere Querschnittskonturierung der Funktionseinheit sieht vor, dass ausgehend von den mit gleichem Durchmesser versehenen beiden Stützprofilringen die diesen zugeordneten Federwandteile entgegengesetzt spitzwinklig zum zentralen Auflageprofilring hin ausrichtbar sind und damit innenseitig ein kegelstumpfförmiger Deformationsfreiraum definiert ist. Dabei ergibt sich, dass die den beiden Federwandteilen im Bereich des Deformationsfreiraums jeweils gegenüberliegenden Auflageprofilflächen einen muldenartigen Teilbereich und zwischenliegende Formerhöhung aufweisen, so dass ein profiliertes Gegenlager für die walkenden Wandzonen gebildet ist.

Zur Erzielung gleichmäßiger Verlagerungs- und Reinigungsbedingungen mittels des zentralen Auflageprofilrings ist vorgesehen, dass die mit diesem als elastische Funktionseinheit konzipierte Walkstruktur ausgehend von einer radialen Längsmittelebene des Auflageprofilrings zu den beiden Stützprofilringen hin weitgehend symmetrisch ausgebildet wird und die zwischen liegenden Federwandteile vorzugsweise jeweils gleichmäßige Wandstärke aufweisen. Daraus resultiert, dass bei einem Punktkontakt des Systems auf dem Ackerboden - mit entsprechender Auflagekraft - der Auflageprofilring und die beiden Stützprofilringe gleichebenig aufliegen können.

Die axiale Querschnittsgestaltung des Systems zeigt auch, dass der Auflageprofilring im Bereich des als metallischer Ringkörper ausgebildeten Spannelements eine äußere Auflagewulst bildet. In deren Bereich können auch weitere Formstrukturen an die Walkstruktur angeformt sein.

Der Verbindungsaufbau der Walkstruktur zum Trägerteil hin sieht vor, dass die beiden von den Stützprofilringen gebildeten und axial endseitigen Haltebereiche jeweils an einem zentralen Profilrohr in ein als Verbindungsprofil vorgesehenes Gegenlager einrastbar sind. Dabei ergibt sich, dass zur Aneinanderreihung der mit dem Profilrohr verbundenen Ringsegmente jeweilige Axialverbinder vorgesehen werden. Diese Axialverbinder der paarweise zusammenwirkenden Stützprofilringe werden vorzugsweise in Form eines jeweiligen Profilansatzes ausgebildet, der den jeweils benachbarten Haltebereich übergreift.

Eine zweite Ausführung der Vorrichtung mit erfindungsgemäßer selbstreinigender Walkstruktur sieht die Anwendung eines weitgehend "einstückigen" Walzenkörpers vor. Dabei ist ein System aufgebaut, bei dem die aus dem Anlageprofilring, den beiden zu diesem symmetrischen Federwandteilen und den beiden Stützprofilringen gebildete Mehr-Ring-Walkstruktur an einem einstückigen Außenmantel geformt wird.

Eine effiziente Roll- und Auflagebreite dieses - im Unterschied zu der aus mehreren Elementen bestehenden ersten Ausführung - im Bereich des Außenmantels einstückigen Walzenkörpers wird dadurch erreicht, dass sich mehrere aneinandergereihte Teil-Walkstrukturen in axialer Richtung wiederholen und zu einer Ackerwalze mit mehreren gleichförmig profilierten Arbeitszonen zusammengefasst sind. Damit weist die einstückige Ackerwalze in Richtung ihrer zentralen Rollachse eine Abfolge von als Funktionseinheit zusammenwirkenden Profilen auf, so dass damit ein nach Art einer Schlauchtrommel ausgebildetes System nutzbar wird.

Die vorteilhafte Ausbildung dieser Schlauchtrommel sieht vor, dass ausgehend von der zentral in dieser verlaufenden Rollachse ein Spannverbinder zum einstückigen Außenmantel hin gerichtet ist, so dass mit diesem Spannverbinder die Walkbewegungen beeinflussbar sind. Insbesondere ist bei diesem System eine Verbindung zum Auflageprofilring hin hergestellt.

Die bereits vorstehend dargestellten Vorteile der Auflageprofilring-Stützprofilring-Kombination ergeben sich auch bei dieser zweiten Ausführung der einstückigen Schlauchtrommel mit analogen Wirkungen. In jedem Fall wird eine Packerwalze realisiert, die ohne zusätzlichen Abstreifer o. dgl. Hilfsbaugruppen sauber bleibt. Durch eine permanente Zwangs-Walk-Bewegung ist ein Verkleben der Walzen vermieden.

Damit ist eine Vorrichtung zum Walzen realisiert, die im Vergleich mit bekannten Systemen einen geringeren Zugkraftbedarf aufweist, einfacher zu warten ist und insgesamt eine Erweiterung des Einsatzbereiches derartiger Walzen ermöglicht.

Eine zusätzliche vorteilhafte Weiterbildung der erfindungsgemäßen Walk-Mantel-Struktur sieht eine Optimierung des innen liegenden Trägerteils vor. Die verbesserten Roll- und Reinigungswirkungen werden dadurch erreicht, dass das ein Gegenlager für die Walkstruktur in der Rollphase bildende Trägerteil nunmehr als eine strukturierte Kammwalze ausgebildet ist, die in Umfangsrichtung jeweilige Rinnenformelemente aufweist. Diese Rinnenformelemente sind dabei so platziert, dass ausgehend von einem jeweiligen axialen Rinnenabstand in radialer Richtung ein Zusammenwirken mit einem der jeweiligen Auflageprofilringe erreicht wird. Diese Gegenlager-Mantel-Struktur wird dabei durch den von außen steuerbaren Auflagedruck so eingesetzt, dass eine bereichsweise verfestigte Rinne im Boden gebildet werden kann. Entsprechend der wirksamen Pressrichtung werden dabei jeweilige längslaufende Rinnen im Boden erzeugt, deren Wellental eine optimal verfestigte Bodenstruktur aufweist. Diese kann dann beispielsweise nach dem Einlegen eines Saatkornes nach Art einer "Wasserrinne" wirken, womit die Wachstumsbedingungen optimiert werden.

Ausgehend von der Basiskonstruktion des Systems ist vorgesehen, dass die mit dem Auflageprofilring zusammenwirkenden Federwandteile eine auf dem freien Außenumfang der Kammwalze auflegbare Stützkontur bilden. Damit wird erreicht, dass diese Stützkonturen in der jeweiligen bodenseitigen Rollphase ebenfalls eine verfestigte Rinne ausbilden.

Eine weitere Verbesserung sieht vor, dass das Trägerteil zwischen den Rinnenformelementen zur Walkstruktur hin mit zumindest einem zugstabilen und druckstabilen Radialverbinder so zusammenwirken kann, dass zwischen den Auflageprofilringen eine Verbindung der Bauteile realisiert wird. Dabei ist vorgesehen, dass die jeweils mittig zwischen den Rinnenformelementen angeordneten Radialverbinder im Bereich einer einstückig als Schlauchmantel geformten Walkstruktur mit den Enden benachbarter Federwandteile in einem Profilpunkt verbunden sind.

Es hat sich gezeigt, dass die vorbeschriebene Kombination der Kammwalze mit dem elastischen Außenmantel ein zuverlässig ohne Abstreifer einsetzbares System bildet. Die Rinnenformelemente wirken dabei gleichzeitig mit der Walkstruktur als zuverlässige Bodenpressstruktur zusammen. Bei aufliegendem Gewicht des Systems in der jeweiligen Rollphase wird dann eine in tangentialer Richtung vorlaufende, den Aufbau einer bisher nachteilig bekannten Bugwelle verhindernde und der längslaufenden Rinnenkontur folgende Pressebene definiert, die in die den Rinnengrund erfassende Bodenverdichtungszone übergeht.

Die Erfindung betrifft, insbesondere somit, bevorzugt die oder eine Vorrichtung zum Walzen von insbesondere Ackerböden o. dgl. Nutzflächen, mit einer oder zumindest einer auf dem Boden abrollbaren Ackerwalze, die ihrerseits einen oder zumindest einen eine zentrale Rollachse definierenden Packwalzenkörper aufweist, der mit einem zu der als Stützachse wirkenden Rollachse einen Ringhohlraum ausbildenden sowie in aufliegender Rollphase bereichsweise oder zumindest bereichsweise elastisch umformbaren Außenmantel versehen ist, wobei in dessen Bereich unter Wirkung einer Rückfederung von elastisch verformbaren Profilbereichen an diesen anhaftende Teile durch einen Selbstreinigungseffekt lösbar sind. Diese Vorrichtung ist insbesondere dadurch weitergebildet, dass der Außenmantel mit einer oder zumindest einer einen Auflageprofilring aufweisenden Walkstruktur versehen ist, an diesen Auflageprofilring beidseits in axialer Richtung jeweils ein radial umlaufender Federwandteil angeformt ist und diese Federwandteile ihrerseits jeweils axial endseitig in einen jeweiligen Stützprofilring übergehen.

Vorteilhaft ist die Walkstruktur vorzugsweise im Bereich der Stützprofilringe mit einem oder zumindest einem radial innen liegenden sowie zur Rollachse hin abstützbaren Trägerteil verbunden oder verbindbar.

Vorzugsweise ist oder sind der Auflageprofilring und/oder das Trägerteil in der aufliegenden Rollphase bereichsweise oder zumindest bereichsweise radial verlagerbar.

Bevorzugt weist der Auflageprofilring einen Ringdurchmesser auf, der größer ist als die insbesondere jeweils gleich großen Durchmesser der Stützprofilringe.

Vorteilhaft ist der Auflageprofilring oder zumindest der Auflageprofilring mit einer diesen in Umfangsrichtung aussteifenden Spannstruktur versehen, insbesondere derart, dass der Auflageprofilring oder zumindest der Auflageprofilring in der aufliegenden Rollphase eine Exzenterlage in Bezug auf die Längsachse einnimmt oder einnehmen kann.

Vorzugsweise ist die Spannstruktur des Auflageprofilrings von einem in dessen Ringkontur integrierbaren Spannelement in Form eines metallischen Ringkörpers gebildet.

Bevorzugt ist die aus dem Auflageprofilring, den beiden zu diesem symmetrischen Federwandteilen und den beiden Stützprofilringen gebildete Walkstruktur als radiale Funktionseinheit an einem Ringsegment vorgesehen, insbesondere derart, dass mehrere dieser axial aneinandergereihten Ringsegmente eine Ackerwalze mit mehreren Arbeitszonen bilden.

Vorteilhaft ist die Funktionseinheit mittels der beiden endseitigen Stützprofilringe unmittelbar auf dem als ein Profilrohr ausgebildeten zentralen Trägerteil festgelegt oder festlegbar, insbesondere derart, dass jeweilige endseitige Haltebereiche zwischen den Ringsegmenten definiert oder definierbar sind.

Vorzugsweise ist in axialer Richtung zwischen den beiden Haltebereichen der Funktionseinheit ein Deformationsfreiraum zum Trägerteil hin gebildet, wobei dieses zur radialen Innenseite der Funktionseinheit hin insbesondere eine eine Walkarbeitszone begrenzende Auflageprofilfläche aufweist.

Bevorzugt sind ausgehend von den mit gleichem Durchmesser versehenen beiden Stützprofilringen die diesen zugeordneten Federwandteile entgegengesetzt spitzwinklig zum zentralen Auflageprofilring hin ausgerichtet oder ausrichtbar. Insbesondere ist oder wird damit der Deformationsfreiraum definiert oder definierbar.

Vorteilhaft weist die den beiden Federwandteilen im Bereich des Deformationsfreiraums gegenüberliegende Auflageprofilfläche zwei muldenartige Teilbereiche mit zwischenliegender Formerhöhung auf.

Vorzugsweise ist die als elastische Funktionseinheit konzipierte Walkstruktur ausgehend von einer radialen Längsmittelebene des Auflageprofilrings, insbesondere weitgehend oder näherungsweise, symmetrisch ausgebildet.

Bevorzugt bildet der Auflageprofilring im Bereich des als metallischer Ringkörper ausgebildeten Spannelements eine äußere Auflagewulst.

Vorteilhaft sind die beiden von den Stützprofilringen gebildeten und axial endseitigen Haltebereiche jeweils an dem zentralen Profilrohr in ein als Verbindungsprofil vorgesehenes Gegenlager eingerastet oder einrastbar.

Vorzugsweise sind zur Aneinanderreihung der mit dem Profilrohr verbundenen Ringsegmente jeweilige Axialverbinder vorgesehen.

Bevorzugt ist als Axialverbinder der paarweise zusammenwirkenden Stützprofilringe ein den jeweils benachbarten Haltebereich übergreifender Profilansatz vorgesehen.

Vorteilhaft ist die aus dem Auflageprofilring, den beiden zu diesem symmetrischen Federwandteilen und den beiden Stützprofilringen gebildete Walkstruktur an einem einstückigen Außenmantel geformt, insbesondere derart, dass mit mehreren sich wiederholend in axialer Richtung aneinandergereihten Teil-Walkstrukturen eine Ackerwalze mit gleichförmig profilierten Arbeitszonen gebildet ist.

Vorzugsweise weist die Ackerwalze eine einstückige Abfolge von als Funktionseinheit zusammenwirkenden Profilen auf. Bevorzugt ist oder wird damit, beispielsweise die Ackerwalze und/oder der Packwalzenkörper als, ein nach Art einer Schlauchtrommel ausgebildetes System nutzbar, insbesondere derart, dass in dieser Schlauchtrommel eine zentrale Stützachse verläuft und von dieser aus jeweilige, die Walkbewegung beeinflussende und zu den Auflageprofilringen gerichtete Spannverbinder vorgesehen sind.

Bevorzugt ist das ein Gegenlager für die Walkstruktur in der Rollphase bildende Trägerteil als eine Rinnenformelemente aufweisende Kammwalze ausgebildet, deren einen jeweiligen axialen Rinnenabstand definierende Rinnenformelemente in radialer Richtung mit jeweils einem der Auflageprofilringe zusammenwirken oder zusammenwirken können und insbesondere eine bereichsweise verfestigte Rinne im Boden bilden oder bilden können.

Vorteilhaft bilden die mit dem Auflageprofilring zusammenwirkenden Federwandteile eine auf dem freien Außenumfang der Kammwalze auflegbare Stützkontur, insbesondere derart, dass diese in der Rollphase eine verfestigte Rinne bewirken oder bewirken können.

Vorzugsweise ist das Trägerteil zwischen den Rinnenformelementen mit zumindest einem zur Walkstruktur hin zugstabilen und drucklabilen Radialverbinder versehen.

Bevorzugt sind die jeweils mittig zwischen den Rinnenformelementen angeordneten Radialverbinder im Bereich einer einstückig als Schlauchmantel geformten Walkstruktur mit den Enden benachbarter Federwandteile in einem Profilpunkt verbunden.

Vorteilhaft wirken oder können die Rinnenformelemente oder die Rinnenformelemente der Vorrichtung mit der Walkstruktur als eine den kapillaren Wasseraufstieg beeinflussende Bodenpressstruktur zusammen oder zusammenwirken, insbesondere derart, dass bei aufliegendem Gewicht des Systems in der Rollphase eine in tangentialer Richtung vorlaufende, den Aufbau einer die Bodenkrume verlagernden Bugwelle verhindernde, die bodenseitige Rinne formende und axial in jeweilige Wellenberge übergehende Pressebene definiert oder definierbar ist.

Weiterhin ist ein Verfahren zur Selbstreinigung von Ackerwalzen angegeben, mit der oder einer, insbesondere erfindungsgemäßen, Vorrichtung, wobei der oder ein Packwalzenkörper auf dem oder einem Ackerboden o. dgl. Nutzfläche abgerollt und dabei der oder ein bereichsweise oder zumindest bereichsweise elastischer Außenmantel mit geschlossener Umfangskontur verformt wird. Dieses Verfahren ist insbesondere dadurch weitergebildet, dass die Ackerwalze während ihrer bodenseitigen Auflagephase beim Abrollvorgang auf dem oder einem Auflageprofilring des elastischen Außenmantels abgestützt wird, die dabei aufgebrachten Druckkräfte als über den Umfang des Außenmantels verteilte oder verteilbare Kräfte eine exzentrische Verlagerung des Auflageprofilrings aus seiner Zentrumslage bewirken und ein damit im Material des Außenmantels erzeugter Wechsel von Druck-, Zug- und/oder Schubbelastungszonen für einen permanenten Reinigungseffekt genutzt wird. Vorteilhaft wird an dem Außenmantel mittels der exzentrischen Verlagerung ein vollumfängliches Umfangswalken durchgeführt.

Bevorzugt wird der Außenmantel im Bereich der oder einer, insbesondere selbsttragenden, Walkstruktur einer Exzenterverlagerung ausgesetzt, wobei diese beim Abrollvorgang insbesondere den Reinigungseffekt auslöst.

Vorteilhaft wird das Umfangswalken mittels der Einstellung von Auflagebedingungen (z.B. Druck), insbesondere gezielt, an variierbare Intensitäten der Reinigung angepasst.

Nachfolgend sind zwei Ausführungsbeispiele der erfindungsgemäßen Packwalzenkörper im Zusammenhang mit einer entsprechenden Vorrichtung und dem Ablauf eines Arbeitsverfahrens beschrieben. Dazu werden die nachfolgend aufgelisteten Darstellungen genutzt. In diesen ist gezeigt:
- Fig. 1: eine Prinzipdarstellung einer Vorrichtung zum Walzen von Ackerböden an einer landwirtschaftlichen Zugmaschine,
- Fig. 2: eine perspektivische Gesamtansicht einer abrollbaren Ackerwalze,
- Fig. 3: eine Explosivdarstellung der die Ackerwalze bildenden Packwalzenkörper im Bereich einer zentralen Rollachse,
- Fig. 4a bis Fig. 4c: eine Schnittdarstellung eines Packwalzenkörpers, bestehend aus mehreren axial verbundenen Ringsegmenten in unterschiedlichen Belastungs- und Deformationsstellungen,
- Fig. 5: eine Stirnansicht eines Packwalzenkörpers in "einstückiger" Ausführung,
- Fig. 6: eine Schnittdarstellung des Packwalzenkörpers gemäß Fig. 5,
- Fig. 7: eine Schnittdarstellung ähnlich Fig. 6 mit einer bodenseitigen Auflage eines Profilbereiches,
- Fig. 8a und Fig. 8b: vergrößerte Ausschnittsdarstellungen des Außenmantels im Bereich eines Auflageprofilrings mit integriertem Spannelement,
- Fig. 9 und Fig. 10: jeweilige Stirnansichten eines Ringsegmentes ähnlich Fig. 4a,
- Fig. 11: eine Schnittdarstellung ähnlich Fig. 4a mit geändertem Trägerteil für das Ringsegment,
- Fig. 12: eine geschnittene Seitenansicht der Walkstruktur mit punktueller Auflage,
- Fig. 13: eine Schnittdarstellung ähnlich Fig. 12 mit Linienkontakt im Bereich der Walkstruktur,
- Fig. 14: ein Längsschnitt einer weiteren Ausführung des Systems mit Packwalzenkörper, bestehend aus mehreren axial verbundenen Ringsegmenten in unbelasteter Stellung,
- Fig. 15: eine Darstellung ähnlich Fig. 14 mit dem Packwalzenkörper in bodenseitiger Auflagestellung,
- Fig. 16: eine zweite Ausführung des Packwalzenkörpers in einem unbelasteten Längsschnitt ähnlich gemäß Fig. 14,
- Fig. 17: ein Längsschnitt ähnlich Fig. 16 mit der Walkstruktur in Einsatzlage auf dem Boden, und
- Fig. 18: eine Querschnittsdarstellung gemäß einer Linie VII-VII in Fig. 15 mit einer bodenseitigen Auflage und Deformationszonen des elastischen Außenmantels.

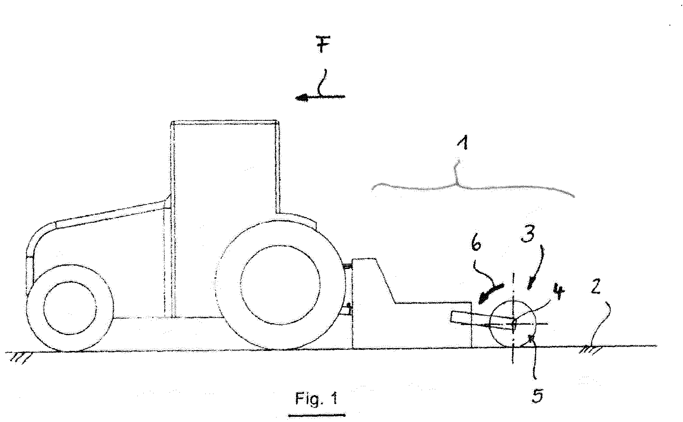

In Fig. 1 ist eine insgesamt mit 1 bezeichnete Vorrichtung zum Walzen von insbesondere Ackerböden o. dgl. Nutzflächen dargestellt. Diese Vorrichtung 1 ist mit zumindest einer auf dem Boden 2 abrollbaren Ackerwalze 3 versehen, die ihrerseits zumindest einen eine zentrale Rollachse 4 definierenden Packwalzenkörper 5 aufweist. Die Vorrichtung 1 ist dabei an einem in Fahrtrichtung F beweglichen Zugfahrzeug in Form eines Schleppers o. dgl. so gehalten, dass im Bereich des Packwalzenkörpers 5 eine mit einem Pfeil 6 verdeutlichte Rollphase auf dem Boden 2 aktivierbar ist.

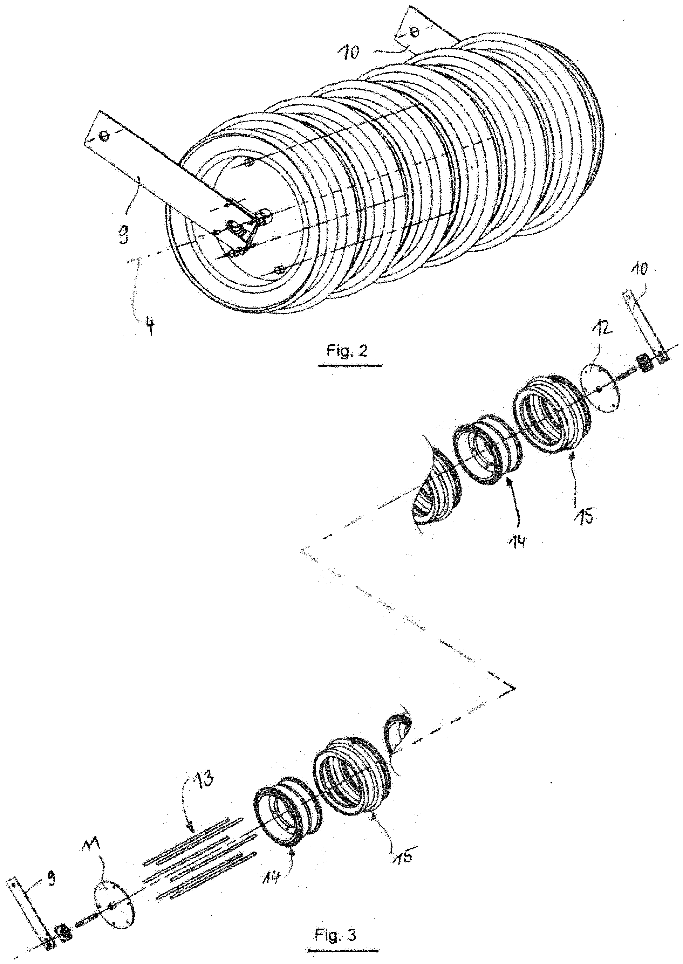

Der "reifenartige" Walzenkörper 5 ist in den Übersichtsdarstellungen gemäß Fig. 2 und Fig. 3 näher veranschaulicht, wobei ein zu der als Stützachse wirksamen Rollachse 4 einen Ringhohlraum 7 ausbildender sowie in aufliegender Rollphase 6 zumindest bereichsweise elastisch umformbarer Außenmantel 8 deutlich wird. Derartige Außenmantel sind allgemein bekannt, wobei in deren Bereich unter Wirkung einer Rückfederung von elastisch verformbaren Profilbereichen an diesen anhaftende Teile durch einen Selbstreinigungseffekt lösbar sind.

Das vorbeschriebene System mit der Ackerwalze 5 sieht einen praktischen Einsatz in Form einer Nachlaufwalze zur Bodenbearbeitung vor (Fig. 1). Dabei sind auch Anwendungen zur Tiefenführung, Rückverfestigung, Bodenkrümelung und Lastabstützung zusätzlicher Aggregate denkbar. Aus der Zusammenschau von Fig. 2 und Fig. 3 wird der bevorzugte modulare Aufbau des Packwalzenkörpers 5 deutlich, wobei dieser prinzipiell aus jeweiligen, an Haltestangen 9 und 10 befindlichen Endplatten 11, 12 aufgebaut ist. Ausgehend von diesen Endplatten 11, 12 sind in Richtung der zentralen Rollachse 4 parallel zu dieser verlaufende Zugstangen 13 vorgesehen, die jeweilige felgenartige Kernelemente in Form von Trägerteilen 14 durchgreifen. Auf diesen eine Reihenanordnung bildenden Trägerteilen 14 sind elastische Mantelringe 15 so festlegbar, dass diese Elementeanordnung die in Fig. 2 in Montagestellung dargestellte Ackerwalze 3 bilden.

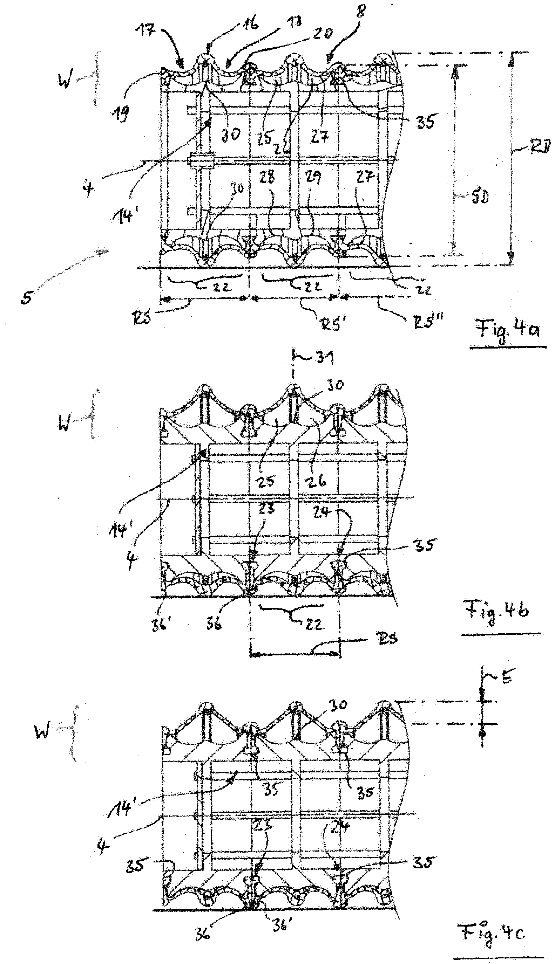

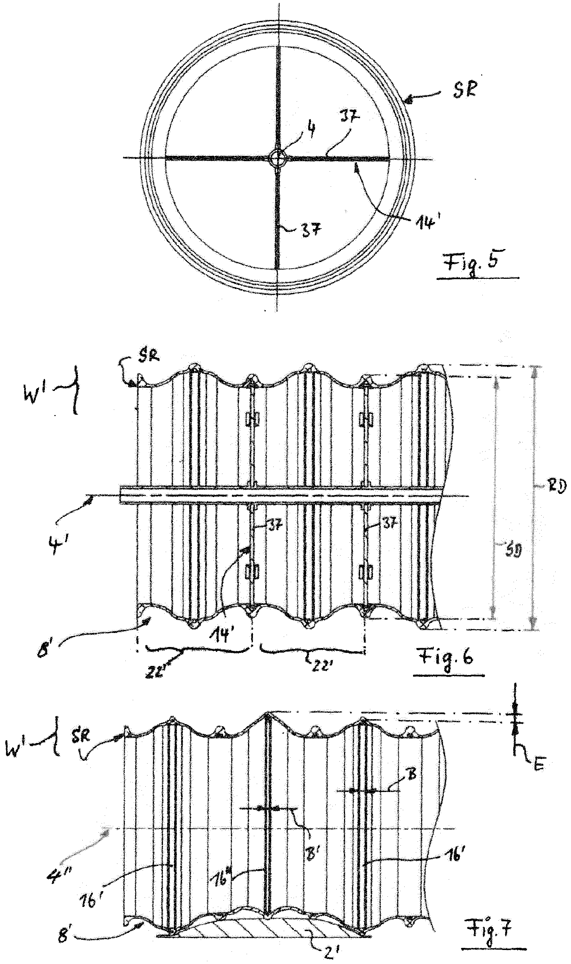

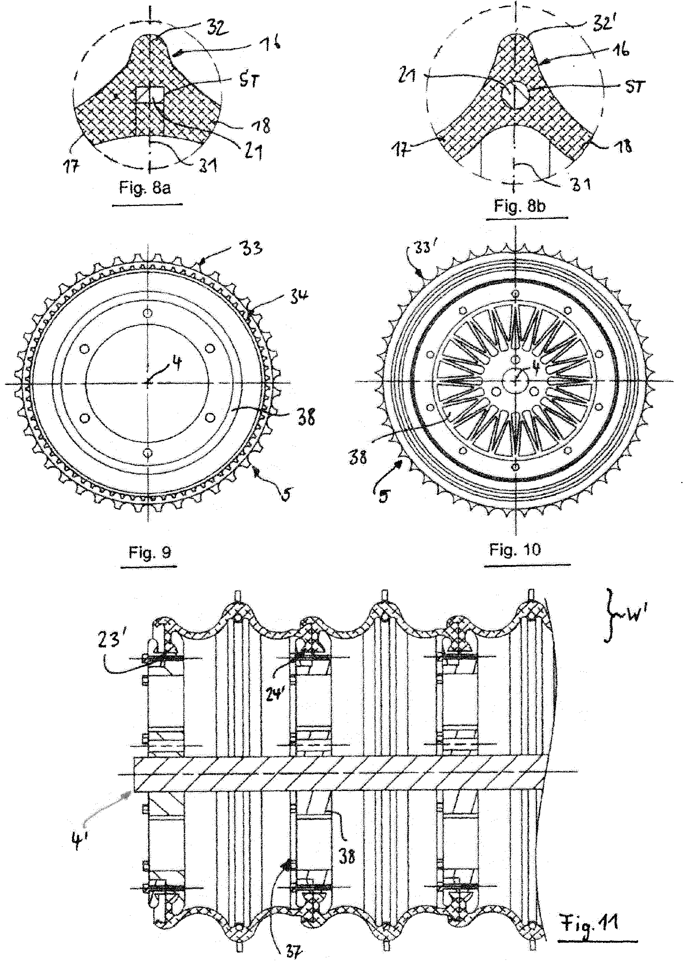

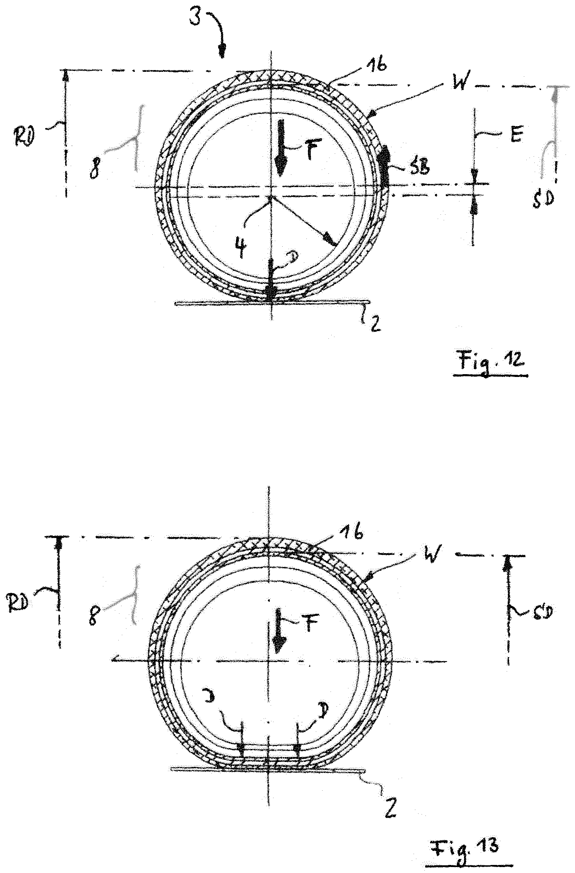

Das erfindungsgemäß verbesserte System einer Vorrichtung zum Walzen von Ackerböden sieht einen verbesserten Packwalzenkörper 5 vor, dessen prinzipieller Aufbau aus den Schnittdarstellungen gemäß Fig. 6 und Fig. 11 deutlich wird. Dabei ist gezeigt, dass der Außenmantel 8 mit zumindest einer einen in der aufliegenden Rollphase 6 (Fig. 4b und Fig. 7) radial verlagerbaren Auflageprofilring 16 aufweisenden Walkstruktur W versehen ist. Diese auch als Exzentrizität mit Blick auf die Rollachse 4 definierbare radiale Verlagerung des Auflageprofilrings 16 ist in Fig. 12 mit einer Exzentrizität E bezeichnet.

Um diese sich vollumfänglich über den Außenumfang des Packwalzenkörpers 5 verteilende "Exzentrizität" des Auflageprofilrings 16 als effiziente Walkstruktur W zu nutzen, ist vorgesehen, dass an den Auflageprofilring 16 beidseits in axialer Richtung jeweils ein radial umlaufender Federwandteil 17 und 18 angeformt ist. Damit ist die Profilierung des erfindungsgemäßen Mantelrings - ähnlich dem Mantelring 15 in Fig. 2 - so definiert, dass damit das erfinderische Grundprinzip gezeigt wird. In zweckmäßiger Ausführung sind die Federwandteile 17, 18 ihrerseits jeweils axial endseitig zu einem Stützprofilring 19, 20 geführt, so dass ein kompakter Mantelring aufgebaut wird. Aus den Schnittdarstellungen gemäß Fig. 4a bis 4c wird deutlich, dass die jeweiligen Stützprofilringe 19, 20 mit dem zumindest einen radial innen liegenden sowie zur Rollachse 4 hin abgestützten Trägerteil 14' verbindbar sind.

Aus den Prinzipdarstellungen gemäß Fig. 4a, Fig. 6 und Fig. 11 wird deutlich, dass der Auflageprofilring 16 einen Ringdurchmesser RD aufweist, der größer ist als die insbesondere jeweils gleich großen Durchmesser SD der Stützprofilringe 19, 20.

Ausgehend von einem prinzipiell elastisch umformbaren Außenmantel 8 sieht die Gestaltung des Auflageprofilrings 16 vor, dass dieser mit einer in Umfangsrichtung eine aussteifende Wirkung erzielenden Spannstruktur ST geformt wird. Denkbar ist dabei, dass der Auflageprofilring 16 im Vergleich mit den nebengeordneten Profilbereichen eine Zone geringerer Elastizität (bzw. höherer Steifigkeit) so definiert, dass der Auflageprofilring 16 unter weitgehender Beibehaltung seiner Ringstruktur mit gleichem Durchmesser an den angrenzenden Federwandteilen 17, 18 elastisch geführt wird und "unverformt" die vorbeschriebene Exzenterlage E (Fig. 12, Fig. 7) einnehmen kann.

Damit wird deutlich, dass in der Abfolge einer aus Fig. 4a, 4b und 4c ersichtlichen Rollphase der Auflageprofilring 16 eine Exzenterlage in Bezug auf die als Längsachse dargestellte Rollachse 4 einnehmen kann. Aus den vergrößerten Darstellungen in Fig. 8a und Fig. 8b sind unterschiedliche Konturgestaltungen des Auflageprofilrings 16 ersichtlich, wobei dieser insbesondere eine innere Spannstruktur ST in Form eines als metallischer Ringkörper 21 ausgebildeten Spannelementes aufweisen kann.

Die konstruktive Umsetzung des erfindungsgemäßen Außenmantels 8 sieht vor, dass die aus dem Auflageprofilring 16, den beiden zu diesem symmetrischen Federwandteilen 17, 18 und den beiden Stützprofilringen 19, 20 gebildete Walkstruktur W als radiale Funktionseinheit 22 an einem Ringsegment RS vorgesehen ist. Ausgehend von diesem profilierten Grundelement ergibt sich, dass mehrere dieser axial aneinandergereihten Ringsegmente RS eine Ackerwalze 3 mit mehreren Arbeitszonen der erfindungsgemäßen Art bilden.

Dieses Konzept der Funktionseinheit 22 (Fig. 4a, Fig. 11) geht davon aus, dass diese mittels der beiden endseitigen Stützprofilringe 19, 20 unmittelbar auf dem als ein Profilrohr ausgebildeten zentralen Trägerteil 14' festlegbar ist. Dabei ergibt sich auch, dass jeweilige endseitige Haltebereiche 23, 24 zwischen den benachbarten Ringsegmenten RS definierbar sind.

Aus den axialen Schnittdarstellungen wird deutlich, dass in axialer Richtung zwischen den beiden Haltebereichen 23, 24 der jeweiligen Funktionseinheit 22 ein Deformationsfreiraum 25, 26 zum Trägerteil 14' hin besteht. Mit dieser Ausbildung der Deformationsfreiräume 25, 26 wird deutlich, dass gleichzeitig das Trägerteil 14' zur radialen Innenseite 27 der Funktionseinheit 22 hin mit eine Walkarbeitszone begrenzenden Auflageprofilflächen 28, 29 wirken kann. Diese Querschnittsgestaltung wird in den Darstellungen gemäß Fig. 4a bis 4c deutlich, wobei eine Wirkung als radiale "Gegenlager" im Bereich der Auflageprofilflächen 28, 29 deutlich wird.

Ausgehend von den mit gleichem Durchmesser SD versehenen beiden Stützprofilringen 19, 20 ist vorgesehen, dass die diesen zugeordneten Federwandteile 17, 18 entgegengesetzt spitzwinklig verlaufend zum zentralen Auflageprofilring 16 hin ausrichtbar sind. In Fig. 4a wird der dabei gebildete Deformationsfreiraum 25, 26 zu den beiden Auflageprofilflächen 28, 29 hin deutlich. Insbesondere ist vorgesehen, dass die den beiden Federwandteilen 17, 18 im Bereich des Deformationsfreiraums 25, 26 gegenüberliegenden Auflageprofilflächen 28, 29 zwei muldenartige Teilbereiche mit zwischenliegender Formerhöhung 30 aufweisen. Damit wird eine Struktur deutlich, bei der die als elastische Funktionseinheit 22 konzipierte Walkstruktur W - ausgehend von einer radialen Längsmittelebene 31 des Auflageprofilrings 16 - in axialer Richtung weitgehend symmetrisch ausgebildet ist.

Die spezielle Profilierung des Auflageprofilrings 16 im Bereich der als metallischer Ringkörper 21 ausgebildeten Spannstruktur ST wird in Fig. 8a und Fig. 8b deutlich, wobei hier jeweilige, unterschiedlich profilierte Ausführungen einer Auflagewulst 32, 32' deutlich werden. Dabei können die Außenumfänge der Auflagewulst 32 auch mit den aus den Seitenansichten gemäß Fig. 9 und Fig. 10 ersichtlichen Zusatzprofilen 33, 33' versehen sein. Auch im Bereich der Stützprofilringe 19 bzw. 20 ist eine Zusatzprofilierung 34 denkbar.

Eine spezifische Gestaltung der Haltebereiche 23, 24 der jeweiligen Funktionseinheiten 22 wird in Fig. 4c deutlich. Dabei ist vorgesehen, dass die beiden von den Stützprofilringen 19, 20 gebildeten und axial endseitigen Haltebereiche 23, 24 jeweils an dem zentralen Profilrohr 14' in ein als Verbindungsprofil vorgesehenes Gegenlager 35 einrastbar sind. Dabei ergibt sich, dass zur Aneinanderreihung der mit dem Profilrohr 14' verbundenen Ringsegmente RS, RS', RS" jeweilige Axialverbinder vorgesehen sind. Als Axialverbinder der paarweise zusammenwirkenden Stützprofilringe 19, 20 ist ein den jeweils benachbarten Haltebereich 23, 24 übergreifender Profilansatz 36, 36' vorgesehen.

Aus den Darstellungen gemäß Fig. 6, Fig. 7 und Fig. 11 wird eine zweite Ausführung des erfindungsgemäßen Systems deutlich. Hier ist die aus dem Auflageprofilring 16, den beiden zu diesem symmetrischen Federwandteilen 17, 18 und den beiden Stützprofilringen 19, 20 gebildete Walkstruktur W' an einem einstückigen Außenmantel 8' angeformt. Ähnlich den aneinandergereihten Ringsegmenten RS (Fig. 4a) wird bei diesem einstückigen Außenmantel 8' mit mehreren, sich wiederholend in axialer Richtung aneinanderreihenden Teil-Walkstrukturen eine Ackerwalze 3 mit gleichförmig profilierten Arbeitszonen gebildet.

Damit wird deutlich, dass diese Ackerwalze 3 eine einstückige Abfolge von als Funktionseinheit 22' zusammenwirkenden Profilen aufweist und damit ein nach Art einer Schlauchtrommel SR ausgebildetes System nutzbar ist. Dabei wird deutlich, dass in dieser Schlauchtrommel SR eine zentrale Rollachse 4' vorgesehen ist, wobei von dieser aus jeweilige, die Walkbewegung beeinflussende und zu den Auflageprofilringen 16 hin gerichtete Spannverbinder 37 als die Trägerteile 14' vorgesehen sind. Diese Spannverbinder 37 sind bei der Ausführung gemäß Fig. 6 als speichenartige Elemente (Fig. 5) vorgesehen. Der Spannverbinder 37 ist dabei in Form eines Seiles, eines Bandes, einer Feder o. dgl. Bauteile denkbar. Insbesondere ist als Spannverbinder 37 eine vorgespannte Zugfeder vorgesehen, so dass damit beim Überrollen von erhöhten Bodenstrukturen oder als Längsrillen verlaufenden Bodenbereichen die Walkstruktur W optimal wirksam bleibt.

Bei der Ausführung gemäß Fig. 11 sind als Spannverbinder 37 jeweilige Scheibenringe 38 mit den hinterschnittenen Haltebereichen 23', 24' vorgesehen. Diese Bereiche 38 sind dabei vorzugsweise mit einer elastischen Struktur versehen, so dass eine optimale Verbindung zwischen der Rollachse 4 und der Walkstruktur W mit Auflageprofilring 16 besteht.

In der zweiten Ausführung gemäß Fig. 7 ist ein System gezeigt, bei der ein "selbsttragendes Walksystem" gebildet ist und die Rollachse 4" lediglich die geometrische Mitte der Schlauchtrommel ST definiert. Die bereits im Zusammenhang mit den Detaildarstellungen gemäß Fig. 8a und 8b beschriebene Ausführung des "ausgesteiften" Auflageprofilrings 16 wird hier in einer praktischen Auflagesituation auf einer Bodenstruktur 2' deutlich. Dabei sind jeweilige randseitige Auflageprofilringe 16' in ihrer Breite B weitgehend unbeeinflusst, und durch die erfindungsgemäße exzentrische Verlagerung des mittleren Auflageprofilrings 16" wird auch dessen geometrische Veränderung im Bereich von W' deutlich.

Aus einer Zusammenschau der Belastungssituationen in Fig. 4a bis 4c und der Querschnitte in Fig. 12 und Fig. 13 wird die erfindungsgemäße Verfahrensführung bei der Selbstreinigung der Ackerwalze 3 deutlich. Die Ackerwalze 3 wird während ihrer bodenseitigen Auflagephase (Fig. 12) beim Abrollvorgang 6 zumindest auf einem Auflageprofilring 16 des elastischen Außenmantels 8 so abgestützt, dass die dabei aufgebrachten Druckkräfte als über den Umfang des Außenmantels 8 verteilbare "innere" Zugkräfte eine exzentrische Verlagerung E des Auflageprofilrings 16 aus seiner Zentrumslage bei 4 bewirken und damit ein im Material des Außenmantels 8 erzeugter Wechsel von Druck-, Zug- und/oder Schubbelastungszonen F, D, SB (Fig. 12) für einen permanenten Reinigungseffekt genutzt wird. In Fig. 12 ist eine "Anfangsbelastung" an der erfindungsgemäßen Ackerwalze 3 bei deren Auflage auf dem Boden 2 dargestellt.

Eine weitere Steigerung der Druckkraft F führt zu der in Fig. 13 ersichtlichen flächigen Auflage mit maximaler Nutzung der Exzentrizität des Auflageprofilrings 16 und teilweisen weiteren Deformation (Pfeil D) im Bereich der gesamten Funktionseinheit 22. Dabei wird erreicht, dass an dem Außenmantel 8 mittels der erfindungsgemäßen Verfahrensführung und Systemeinstellung erstmals - mit einer exzentrischen Verlagerung E - ein vollumfängliches Umfangswalken ausgelöst wird und damit ein innovatives Grundkonzept beim Walzen von Ackerböden umgesetzt ist.

Diese Verfahrensführung wird im Wesentlichen dadurch effizient, dass der Außenmantel 8 im Bereich seiner weitgehend selbsttragenden Walkstruktur W, W' einer einstellbaren Exzenterverlagerung ausgesetzt werden kann und damit beim Abrollvorgang 6 der beabsichtigte Reinigungseffekt ausgelöst wird und variabel beeinflusst werden kann. Mittels der gezielten Einstellung und/oder Vorauswahl jeweiliger Auflagebedingungen (Fig. 1) kann das Umfangswalken gezielt an variierbare Intensitäten der Reinigung so angepasst werden, dass unterschiedliche Verfahrensparameter während eines Arbeitsablaufs realisierbar sind und eine optimale Anpassung an variierende Bodenbedingungen erreicht wird.

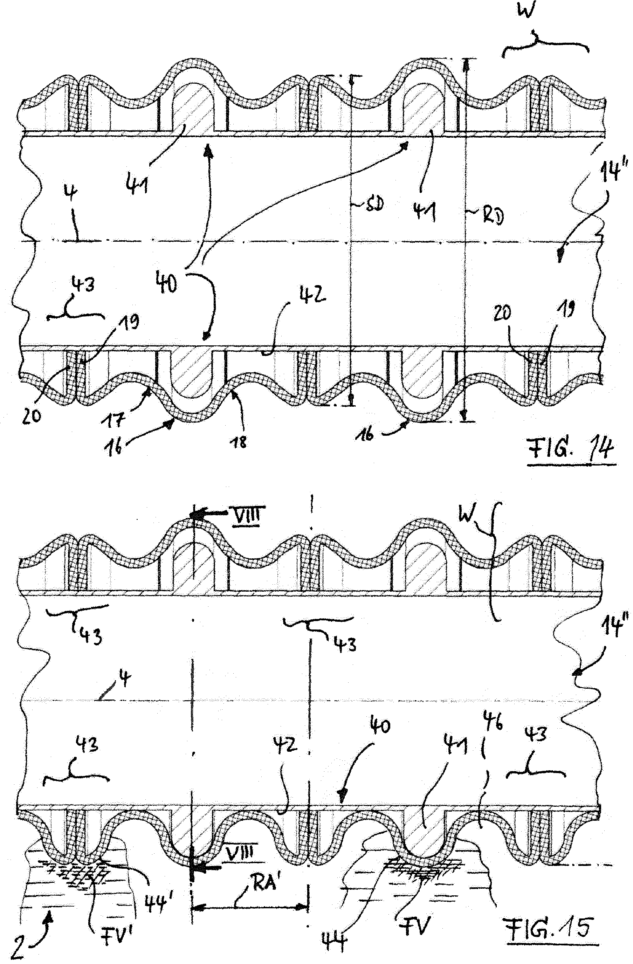

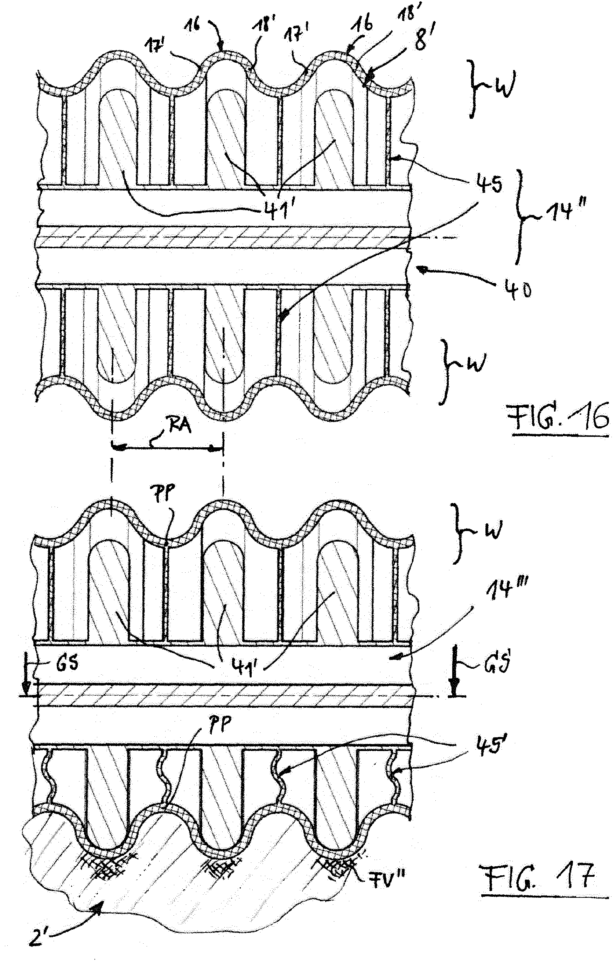

Aus einer Zusammenschau der Konstruktionen gemäß Fig. 14 bis 18 wird eine weitere Verbesserung des Einsatzes der Walkstruktur W in erfindungsgemäßer Kombination mit dem Auflageprofilring 16 deutlich. Hier zeigen die zwei Ausführungsbeispiele gemäß Fig. 14 und Fig. 16, dass das ein Gegenlager für die Walkstruktur W in der Rollphase 6 (Fig. 15) bildende Trägerteil 14" als eine Kammwalze 40 mit in axialer Richtung insbesondere regelmäßiger Anordnung von Rinnenformelementen 41 ausgebildet ist.

Diese Rinnenformelemente 41 bilden einen jeweiligen axialen Rinnenabstand RA, RA' (Fig. 15, Fig. 16) und sind dabei so angeordnet, dass die Rinnenformelemente 41 in radialer Richtung mit jeweils einem der Auflageprofilringe 16 zusammenwirken können. Aus den jeweiligen Auflagesituationen in Fig. 15 und 16 wird deutlich, dass die hier im Längsschnitt dargestellten Einzelteile der Kammwalze 40 die Walkstruktur W "exzentrisch" verlagern (Fig. 17). Damit werden jeweils bereichsweise verfestigte Rinnen 44, 44', 44" gebildet. Die Verfestigungen FV, FV' im Bereich der Rinnen 44, 44' sind in Fig. 15 durch den Abstand bzw. die Dichte der Schraffurlinien verdeutlicht.

Damit ist gezeigt, dass die mit dem Auflageprofilring 16 zusammenwirkenden seitlichen Federwandteile 17, 18 eine bereits auf dem unbelastet freien Außenumfang 42 (Fig. 14) der Kammwalze 40 auflegbare Stützkontur 43 in Form der Ringe 19, 20 bilden können. Aus der Darstellung in Fig. 15 wird deutlich, dass dabei jeweilige Rinnenabstände RA' definiert werden, da in der Rollphase 6 eine jeweilige verfestigte Rinne 44 bzw. 44' gebildet wird.

Mit der Ausführung gemäß Fig. 16 ist eine weitere Verbesserungsmöglichkeit aufgezeigt, wobei dieses System für extrem schwere Böden vorgesehen ist. Zur Verbesserung des selbstreinigenden Effektes ist diese Kammwalzen-Außenmantel-Kombination mit einem "beweglichen" Außenmantel 8' versehen. Dieser wirkt über eine neuartige zugstabile und drucklabile Radialverbindung 45, beispielsweise in Form einer PU-Speicherfelge, mit dem inneren Trägerteil 14‴ des Systems zusammen. Damit kann bei dieser Variante (im Unterschied zu den Ausführungen gemäß Fig. 14 und 15) eine schlauchartige Struktur des Außenmantels eingesetzt werden. Dabei ist vorgesehen, dass die vorzugsweise mittig zwischen den axial beabstandeten Rinnenformelementen 41' (Abstand RA) angeordneten Radialverbinder 45 im Bereich einer einstückig als Schlauchmantel 8' geformten Walkstruktur W eingesetzt werden. Mit Blick auf die funktionalen Auflageprofilringe 16 wird deutlich, dass deren benachbarte seitliche Federwandteile 17', 18' einen Profilpunkt PP definieren, in dessen Bereich der jeweilige Radialverbinder 45 gehalten ist. Dessen zugstabile und drucklabile Gestaltung wird in Fig. 17 deutlich, wobei hier die drucklabile Phase bei der Bodenauflage des Systems (bei 2') mit dem Bereich 45' des Radialverbinders 45' angedeutet ist.

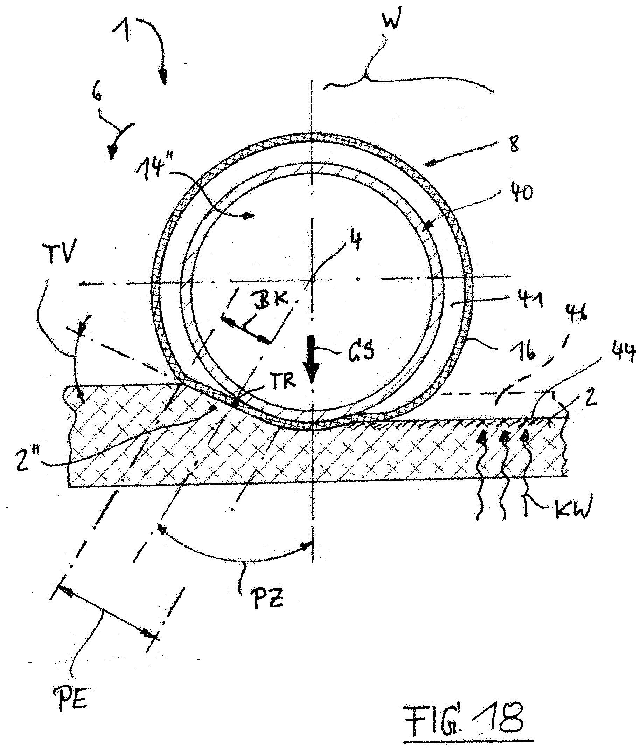

In Fig. 18 zeigt eine Querschnittsdarstellung der Kammwalze 40 mit umgreifender Walkstruktur W die Auflagesituation unter Wirkung des Systemgewichtes GS. Diese bei der Bedienung der Vorrichtung 1 einstellbare Belastung wird mittels des innen liegenden Trägerteils 14" im Bereich der radialen Rinnenformelemente 41 so auf die elastischen Strukturen W übertragen, dass in einem gepressten Bodenbereich 2' eine bisher bei Walzen-Konstruktionen des Standes der Technik auftretende "Bugwelle" vermieden ist. Dabei wird - in Abhängigkeit von der jeweiligen Werkstoffkombination im Bereich des Außenmantels 8 und des Trägerteils 14" - ein Wirksystem gebildet, bei dem das Rinnenformelement 41 mit der Walkstruktur W als eine den kapillaren Wasseraufstieg KW beeinflussende Bodenpressstruktur zusammenwirken. Aus Fig. 18 wird deutlich, dass in der Rollphase 6 bei aufliegendem Gewicht GS des Systems eine in tangentialer Richtung TV - vom Punkt TR - vorlaufende Pressebene PE definierbar ist. Diese sich nach hinten fortsetzende Pressebene PE weist einen vorderen Bereich BK auf, in dem die Bildung einer bisher bei den Vorrichtungen des Standes der Technik auftretenden Bugwelle verhindert wird. In einer "hinteren" Presszone PZ wird die jeweilige bodenseitige Rinne 44, 44', 44" geformt, wobei die Pressebene PE axial in jeweilige benachbarte Wellenberge 46 übergeht.

Mit Blick auf die Gesamtkonstruktion einer erfindungsgemäß verbesserten Packerwalze 5 (Fig.1 bis Fig. 18) ergeben sich damit wesentliche Einsatzvorteile. Neben der walkenden Bewegung des Außenmantels 8' und dem damit verbundenen abstreiferlosen Reinigungsvorgang wird eine optimale Bodenkontaktfläche im Bereich der Pressebene PE wirksam. Daraus resultiert für die erfindungsgemäße Ausführung des Packwalzenkörpers ein vorteilhaft verringerter Rollwiderstand, und der Zugkraftbedarf wird minimiert, so dass bei verringerten Wartungskosten auch der abstreiferbedingte Verschleiß vermieden ist.

Es wurde festgestellt, dass mit der neuartigen Abflachung des Systems an der Bodenkontaktfläche mittels jeweiliger Rinnenformelemente eine zur weiteren Bodenbearbeitung effizient einsetzbare "Keilringwalzen-Kontur" erreicht werden kann. Gleichzeitig kann der die Bugwelle erzeugende "Bulldozing-Effekt" vermieden werden, so dass die Nachteile aus dem Stand der Technik bekannter Walzenformen, die insbesondere auch durch den Abstreifer gebremst werden, sicher vermieden sind. Die Gefahr einer Blockade der erfindungsgemäßen Packerwalze ist außerdem minimiert.

## Patentansprüche

1. Vorrichtung zum Walzen von insbesondere Ackerböden o. dgl. Nutzflächen, mit zumindest einer auf dem Boden (2) abrollbaren Ackerwalze (3), die ihrerseits zumindest einen eine zentrale Rollachse (4) definierenden Packwalzenkörper (5) aufweist, der mit einem zu der als Stützachse wirkenden Rollachse (4, 4') einen Ringhohlraum (7) ausbildenden sowie in aufliegender Rollphase (6) zumindest bereichsweise elastisch umformbaren Außenmantel (8) versehen ist, wobei in dessen Bereich unter Wirkung einer Rückfederung von elastisch verformbaren Profilbereichen an diesen anhaftende Teile durch einen Selbstreinigungseffekt lösbar sind, **dadurch gekennzeichnet, dass** der Außenmantel (8) mit zumindest einer einen Auflageprofilring (16) aufweisenden Walkstruktur (W) versehen ist, an diesen Auflageprofilring (16) beidseits in axialer Richtung jeweils ein radial umlaufender Federwandteil (17, 18) angeformt ist und diese Federwandteile (17, 18) ihrerseits jeweils axial endseitig in einen jeweiligen Stützprofilring (19, 20) übergehen.

2. Vorrichtung nach Anspruch 1, **dadurch gekennzeichnet, dass** die Walkstruktur (W) vorzugsweise im Bereich der Stützprofilringe (19, 20) mit zumindest einem radial innen liegenden sowie zur Rollachse (4) hin abstützbaren Trägerteil (14, 14') verbindbar ist.

3. Vorrichtung nach Anspruch 1 oder 2, **dadurch gekennzeichnet, dass** der Auflageprofilring (16) und/oder das Trägerteil (14, 14', 14") in der aufliegenden Rollphase (6) zumindest bereichsweise radial verlagerbar ist/sind.

4. Vorrichtung nach einem der Ansprüche 1 bis 3, **dadurch gekennzeichnet, dass** der Auflageprofilring (16) einen Ringdurchmesser (RD) aufweist, der größer ist als die insbesondere jeweils gleich großen Durchmesser (SD) der Stützprofilringe (19, 20).

5. Vorrichtung nach einem der Ansprüche 1 bis 4, **dadurch gekennzeichnet, dass** zumindest der Auflageprofilring (16) mit einer diesen in Umfangsrichtung aussteifenden Spannstruktur versehen ist, derart, dass zumindest der Auflageprofilring (16) in der aufliegenden Rollphase (6) eine Exzenterlage (E) in Bezug auf die Längsachse (4) einnimmt.

6. Vorrichtung nach einem der Ansprüche 1 bis 5, **dadurch gekennzeichnet, dass** die Spannstruktur (ST) des Auflageprofilrings (16) von einem in dessen Ringkontur integrierbaren Spannelement in Form eines metallischen Ringkörpers (21) gebildet ist.

7. Vorrichtung nach einem der Ansprüche 1 bis 6, **dadurch gekennzeichnet, dass** die aus dem Auflageprofilring (16), den beiden zu diesem symmetrischen Federwandteilen (17, 18) und den beiden Stützprofilringen (19, 20) gebildete Walkstruktur (W) als radiale Funktionseinheit (22) an einem Ringsegment (RS) vorgesehen ist, derart, dass mehrere dieser axial aneinandergereihten Ringsegmente (RS) eine Ackerwalze (3) mit mehreren Arbeitszonen bilden.

8. Vorrichtung nach Anspruch 7, **dadurch gekennzeichnet, dass** die Funktionseinheit (22) mittels der beiden endseitigen Stützprofilringe (19, 20) unmittelbar auf dem als ein Profilrohr ausgebildeten zentralen Trägerteil (14') festlegbar ist, derart, dass jeweilige endseitige Haltebereiche (23, 24) zwischen den Ringsegmenten (RS) definierbar sind.

9. Vorrichtung nach Anspruch 7 oder 8, **dadurch gekennzeichnet, dass** in axialer Richtung zwischen den beiden Haltebereichen (23, 24) der Funktionseinheit (22) ein Deformationsfreiraum (25, 26) zum Trägerteil (14') hin gebildet ist, wobei dieses zur radialen Innenseite (27) der Funktionseinheit (22) hin eine eine Walkarbeitszone begrenzende Auflageprofilfläche (28, 29) aufweist.

10. Vorrichtung nach einem der Ansprüche 7 bis 9, **dadurch gekennzeichnet, dass** ausgehend von den mit gleichem Durchmesser (SD) versehenen beiden Stützprofilringen (19, 20) die diesen zugeordneten Federwandteile (17, 18) entgegengesetzt spitzwinklig zum zentralen Auflageprofilring (16) hin ausrichtbar sind und damit der Deformationsfreiraum (25, 26) definiert wird.

11. Vorrichtung nach einem der Ansprüche 7 bis 10, **dadurch gekennzeichnet, dass** die den beiden Federwandteilen (17, 18) im Bereich des Deformationsfreiraums (25, 26) gegenüberliegende Auflageprofilfläche (28, 29) zwei muldenartige Teilbereiche mit zwischenliegender Formerhöhung (30) aufweist.

12. Vorrichtung nach einem der Ansprüche 7 bis 11, **dadurch gekennzeichnet, dass** die als elastische Funktionseinheit (22) konzipierte Walkstruktur (W) ausgehend von einer radialen Längsmittelebene (31) des Auflageprofilrings (16) weitgehend symmetrisch ausgebildet ist.

13. Vorrichtung nach einem der Ansprüche 7 bis 12, **dadurch gekennzeichnet, dass** der Auflageprofilring (16) im Bereich des als metallischer Ringkörper (21) ausgebildeten Spannelements eine äußere Auflagewulst (32, 32') bildet.

14. Vorrichtung nach einem der Ansprüche 7 bis 13, **dadurch gekennzeichnet, dass** die beiden von den Stützprofilringen gebildeten und axial endseitigen Haltebereiche jeweils an dem zentralen Profilrohr (14') in ein als Verbindungsprofil vorgesehenes Gegenlager (35) einrastbar sind.

15. Vorrichtung nach Anspruch 14, **dadurch gekennzeichnet, dass** zur Aneinanderreihung der mit dem Profilrohr (14') verbundenen Ringsegmente (RS, RS', RS") jeweilige Axialverbinder vorgesehen sind.

## Claims

1. Device for rolling particularly agricultural land or similar usable areas, with at least one land roller (3) that can be rolled on the ground (2), which in turn comprises at least one pack-rolling body (5) defining a central rolling axis (4), which is provided with an outer envelope (8) forming an annular cavity (7) around the rolling axis (4, 4') that acts as a supporting axis, and is elastically deformable at least in sections in a supporting rolling phase (6), wherein in this region, under the spring-back effect of elastically deformable profile regions parts adhering thereto can be removed by a self-cleaning effect, **characterised in that** the outer envelope (8) is provided with at least one working structure (W) comprising a coating profile ring (16), a radially peripheral spring wall part (17, 18) is formed on both sides of said coating profile ring (16) in the axial direction, and said spring wall parts (17, 18), in turn, each merge axially on the end into a respective supporting profile ring (19, 20).

2. Device according to claim 1, **characterised in that** the working structure (W) is preferably connectable in the region of the supporting profile rings (19, 20) with at least one radially internal support element (14, 14') and which can be supported towards the rolling axis (4).

3. Device according to claim 1 or 2, **characterised in that** the coating profile ring (16) and/or the support element (14, 14', 14") is/are radially displaceable at least in sections in the supported rolling phase (6).

4. Device according to any one of claims 1 to 3, **characterised in that** the coating profile ring (16) has a ring diameter (RD) that is larger than the particularly in each case equally sized diameter (SD) of the supporting profile rings (19, 20).

5. Device according to any one of claims 1 to 4, **characterised in that** at least the coating profile ring (16) is provided with a tensioning structure stiffening this in the peripheral direction, such that at least the coating profile ring (16) adopts an eccentric position in relation to the longitudinal axis (4) in the supporting rolling phase (4).

6. Device according to any one of claims 1 to 5, **characterised in that** the tensioning structure (ST) of the coating profile ring (16) is formed by a tensioning element in the form of a metallic annular body (21) that can be integrated into its annular contour

7. Device according to any one of claims 1 to 6, **characterised in that** the working structure (W) formed by the coating profile ring (16), the two spring wall parts (17, 18) symmetrical thereto, and the two supporting profile rings (19, 20), is provided as a radial functional unit (22) on a ring segment (RS), such that a plurality of these axially strung together ring segments (RS) form a land roller (3) with a plurality of working zones.

8. Device according to claim 7, **characterised in that** the functional unit (22) can be secured by means of the two end supporting profile rings (19, 20) directly on the central support element (14') formed by a profile tube, such that the respective end holding areas (23, 24) are definable between the ring segments (RS).

9. Device according to claim 7 or 8, **characterised in that** in the axial direction between the two holding areas (23, 24) the functional unit (22) has a deformation clearance (25, 26) to the support element (14'), wherein towards the radial inner side (27) of the functional unit (22) this has a supporting profile surface (28, 29) delimiting a roller levelling zone.

10. Device according to any one of claims 7 to 9, **characterised in that** starting from the two supporting profile rings (19, 20) having the same diameter (SD) (19, 20) the spring wall parts (17, 18) associated with these can be aligned in opposition at an acute angle to the central coating profile ring (16) and thus the deformation clearance (25, 26) is defined.

11. Device according to any one of claims 7 to 10, **characterised in that** the supporting profile surface (28, 29) opposing the two spring wall parts (17, 18) in the region of the deformation clearance (25, 26) has two trough-like sections interspersed with a raised form (30).

12. Device according to any one of claims 7 to 11, **characterised in that** the working structure (W) designed as an elastic functional unit (22) is configured in a substantially symmetrical manner starting from a radial longitudinal median plane (31) of the coating profile ring (16).

13. Device according to any one of claims 7 to 12, **characterised in that** the coating profile ring (16) in the region of the tensioning element configured as a metallic ring body (21) forms an external support bead (32, 32').

14. Device according to any one of claims 7 to 13, **characterised in that** the two end holding areas formed by the supporting profile rings can each be latched onto the central profile tube (14') in a counter-bearing (35) provided as a connecting profile.

15. Device according to claim 14, **characterised in that** for the stringing together of the ring segments (RS, RS', RS") attached to the profile pipe (14') axial connectors are provided in each case.

## Revendications

1. Dispositif pour rouler en particulier des sols arables ou surfaces utiles similaires, avec au moins un rouleau agricole (3) pouvant rouler sur le sol (2), qui présente de son côté au moins un corps de rouleau compacteur (5) définissant un axe de roulement (4) central, qui est pourvu d'une enveloppe extérieure (8) réalisant une cavité annulaire (7) par rapport à l'axe de roulement (4, 4') agissant comme axe de soutien et pouvant se déformer élastiquement au moins par zones dans la phase de roulement (6) en appui, dans lequel dans la zone de celle-ci sous l'action d'un retour élastique de zones de profilé déformables élastiquement des pièces adhérant à celles-ci peuvent être détachées par un effet d'autonettoyage, **caractérisé en ce que** l'enveloppe extérieure (8) est pourvue d'au moins une structure de foulage (W) présentant une bague profilée d'appui (16), respectivement une partie de paroi élastique (17, 18) radialement périphérique est formée sur cette bague profilée d'appui (16) des deux côtés dans la direction axiale et ces parties de paroi élastique (17, 18) se prolongent de leur côté respectivement axialement côté extrémité en une bague profilée de soutien (19, 20) respective.

2. Dispositif selon la revendication 1, **caractérisé en ce que** la structure de foulage (W) peut être reliée de préférence dans la zone des bagues profilées de soutien (19, 20), à au moins une partie de support (14, 14') située radialement à l'intérieur et pouvant être soutenue vers l'axe de roulement (4).

3. Dispositif selon la revendication 1 ou 2, **caractérisé en ce que** la bague profilée d'appui (16) et/ou la pièce de support (14, 14', 14") est/sont déplaçable(s) radialement au moins par zones dans la phase de roulement (6) en appui.

4. Dispositif selon l'une quelconque des revendications 1 à 3, **caractérisé en ce que** la bague profilée d'appui (16) présente un diamètre de bague (RD), qui est supérieur aux diamètres (SD) des bagues profilées de soutien (19, 20) en particulier respectivement égaux.

5. Dispositif selon l'une quelconque des revendications 1 à 4, **caractérisé en ce qu'**au moins la bague profilée d'appui (16) est pourvue d'une structure de serrage renforçant celle-ci dans la direction périphérique, de telle sorte qu'au moins la bague profilée d'appui (16) occupe une position excentrée (E) par rapport à l'axe longitudinal (4) dans la phase de roulement (6) en appui.

6. Dispositif selon l'une quelconque des revendications 1 à 5, **caractérisé en ce que** la structure de serrage (ST) de la bague profilée d'appui (16) est formée par un élément de serrage pouvant être intégré dans le contour annulaire de celle-ci sous la forme d'un corps annulaire métallique (21).

7. Dispositif selon l'une quelconque des revendications 1 à 6, **caractérisé en ce que** la structure de foulage (W) formée de la bague profilée d'appui (16), des deux parties de paroi élastique (17, 18) symétriques par rapport à celle-ci et des deux bagues profilées de soutien (19, 20) est prévue sous forme d'unité fonctionnelle (22) radiale sur un segment annulaire (RS), de telle sorte que plusieurs de ces segments annulaires (RS) alignés axialement forment un rouleau agricole (3) avec plusieurs zones de travail.

8. Dispositif selon la revendication 7, **caractérisé en ce que** l'unité fonctionnelle (22) peut être fixée directement sur la partie de support centrale (14') réalisée sous la forme d'un tube profilé au moyen des deux bagues profilées de soutien (19, 20) côté extrémité, de telle sorte que des zones de retenue (23, 24) respectives côté extrémité peuvent être définies entre les segments annulaires (RS).

9. Dispositif selon la revendication 7 ou 8, **caractérisé en ce qu'**un espace libre de déformation (25, 26) est formé dans la direction axiale entre les deux zones de retenue (23, 24) de l'unité fonctionnelle (22) vers la pièce de support (14'), dans lequel celle-ci présente vers la face intérieure radiale (27) de l'unité fonctionnelle (22) une surface profilée d'appui (28, 29) délimitant une zone de travail de foulage.

10. Dispositif selon l'une quelconque des revendications 7 à 9, **caractérisé en ce que**, en partant des deux bagues profilées de soutien (19, 20) pourvues du même diamètre (SD), les parties de paroi élastique (17, 18) associées à celles-ci peuvent être orientées en sens inverse à angle aigu vers la bague profilée d'appui (16) centrale et l'espace libre de déformation (25, 26) est défini ainsi.

11. Dispositif selon l'une quelconque des revendications 7 à 10, **caractérisé en ce que** la surface profilée d'appui (28, 29) opposée aux deux parties de paroi élastique (17, 18) dans la zone de l'espace libre de déformation (25, 26) présente deux zones partielles en forme d'auge avec une surélévation de forme (30) intercalée.

12. Dispositif selon l'une quelconque des revendications 7 à 11, **caractérisé en ce que** la structure de foulage (W) conçue comme une unité fonctionnelle (22) élastique est réalisée en grande partie de manière symétrique à partir d'un plan médian longitudinal radial (31) de la bague profilée d'appui (16).

13. Dispositif selon l'une quelconque des revendications 7 à 12, **caractérisé en ce que** la bague d'appui profilée (16) forme un bourrelet d'appui extérieur (32, 32') dans la zone de l'élément de serrage réalisé sous la forme d'un corps annulaire métallique (21).

14. Dispositif selon l'une quelconque des revendications 7 à 13, **caractérisé en ce que** les deux zones de retenue formées par les bagues profilées de soutien et axialement côté extrémité peuvent être encliquetées respectivement sur le tube profilé (14') central dans un contre-appui (35) prévu comme profilé de liaison.

15. Dispositif selon la revendication 14, **caractérisé en ce que** des raccords axiaux respectifs sont prévus pour la juxtaposition des segments annulaires (RS, RS', RS") reliés au tube profilé (14').
